Europäisches Patentamt

European Patent Office

Office européen des brevets

(11) Publication number : **0 509 748 A1**

# EUROPEAN PATENT APPLICATION

(21) Application number : 92303323.7

(51) Int. Cl.⁵ : **A23K 1/02, A23K 1/16**

(22) Date of filing : **14.04.92**

(30) Priority : **16.04.91 GB 9108044**

(43) Date of publication of application :
**21.10.92 Bulletin 92/43**

(84) Designated Contracting States :
**AT BE CH DE DK ES FR GB GR IT LI NL PT SE**

(71) Applicant : **UNILEVER PLC**
**Unilever House Blackfriars P.O. Box 68**
**London EC4P 4BQ (GB)**
(84) **GB**

(71) Applicant : **UNILEVER N.V.**
**Burgemeester s'Jacobplein 1 P.O. Box 760**
**NL-3000 DK Rotterdam (NL)**
(84) **BE CH DE DK ES FR GR IT LI NL PT SE AT**

(72) Inventor : **Bee, Rodney David**
**Unilever Research, Colworth Laboratory,**
**Sharnbrook**
**Bedford MK44 1LQ (GB)**
Inventor : **Freeman, Christopher Paul**
**Unilever Research, Colworth Laboratory,**
**Sharnbrook**
**Bedford MK44 1LQ (GB)**
Inventor : **Perry, Susan Mary**
**Unilever Research, Colworth Laboratory,**
**Sharnbrook**
**Bedford MK44 1LQ (GB)**

(74) Representative : **Butler, David John et al**
**Unilever PLC Patent Division Colworth House**
**Sharnbrook**
**GB-Bedford MK44 1LQ (GB)**

(54) **Process for the manufacture of compound animal feedstuffs.**

(57)    Manufacture of a compound animal feedstuff containing lipid, molasses and solid feed ingredients, wherein the lipid and molasses are mixed to form an emulsion stable to reheating to a temperature of at least 70°C, and the emulsion is blended with the solid feed ingredients and extruded (pelleted). preferably the emulsion contains lipid particles (droplets) of average size not greater than about 60μm. Enhanced lipid inclusion levels can be achieved in the extruded product without loss of physical quality such as pellet hardness.

EP 0 509 748 A1

EP 0 509 748 A1

This invention relates to process for the manufacture of compound animal feedstuffs, and particularly those in extruded form which contain blends of lipid (fat), molasses and solid feed ingredients.

For nutritional and/or economic reasons, it is often desirable to raise the inclusion level of the lipid in such feeds. Unfortunately, increased lipid inclusion levels generally impair the physical properties (hardness and free-flowing properties) of the extruded particulate material (pellets, cubes or briquettes).

By the invention, we provide a process that enables enhanced lipid inclusion levels to be achieved without loss of physical quality.

Specifically, the invention comprises a process for the manufacture of a compound animal feedstuff containing lipid, molasses and solid feed ingredients, wherein the lipid and molasses are mixed to form an emulsion stable to reheating to a temperature of at least 70°C, more preferably at least 80°C, and the emulsion is blended with the solid feed ingredients and extruded.

Preferably the emulsion is formed by homogenisation.

Preferably the emulsion is formed at elevated temperature. This is conveniently achieved if the molasses is heated to a temperature of at least about 50°C before emulsification. Conveniently, the lipid is also heated, preferably to a temperature of at least about 50°C, and more preferably at least about 60°C, before emulsification.

It is desirable to ensure that the emulsion contains lipid particles (droplets) of average size not greater than about 60μm, preferably not greater than about 30μm.

Preferably the emulsion is formed by passage of the lipid and the molasses together through an in-line homogeniser, ie. a mixer than imparts high energy and high shear to the lipid and molasses. Conveniently, an unstable pre-mix of the lipid and molasses can be made in a single mixer, and passed immediately to the homogeniser.

The lipid can be any of the oils or fats conventionally used in animal feedstuffs. Examples are palm oil (preferably in the form of palm fatty acid distillate), soya oil, coconut oil, and fish oils such as whole fish body oil and fish acid oil.

The term "molasses" is used herein to mean any concentrated aqueous composition rich in sugars. In general, this will be the commodity molasses conventionally used in animal feed manufacture, usually beet molasses.

The solid feed ingredients can be any combination of the solid ingredients normally used in compound animal feeds. These will usually include cereals or cereal by-products, such as wheat, barley, oats, rye; oil seeds and residues from oil seed processing, such as soya and rapeseed; legumes, such as field peas, field beans and lupins; and low-cost by-products such as sugarbeet pulp. Minor components include vitamins, minerals and trace elements. An advantage of the invention, however, is that because the increased lipid inclusion level provides energy in the diet, the solid components can be selected from lower-value materials than would normally be required for nutritional reasons. Thus, a feedstuff made in accordance with the invention can include higher levels of such low-cost solids, such as rice by-products (paddy meal), sugarbeet pulp, potato pulp, citrus pulp, field beans, and processed straw.

The proportion of lipid in the emulsion will generally be at least about 1%, and more pereferably at least about 5%, by weight.

The emulsion will normally comprise at least about 5%, and more preferably at least about 10%, by weight of the compound feed.

In most practical situations, the compound feedstuff is formed by extrusion in a ring-roll press.

The invention also comprises equipment for the manufacture of an extruded compound animal feedstuff, comprising means for holding and heating lipid to a temperature of at least about 50°C, means for holding and heating molasses to a temperature of at least about 50°C, mixing means capable of forming an emulsion of the preheated lipid and pre-heated molasses containing lipid particles (droplets) of average size not greater than about 60 μm, and means for blending the emulsion with solid animal feedstuff ingredients and extruding the resulting blend to form a compound feedstuff.

By practising the invention, the lipid level in an extruded compound feed can be raised by as much as 4 percentage units without significant reduction in the physical properties of the extruded material.

We believe that maintaining the average particle size of the lipid droplets within the emulsion below about 60μm is an important factor in ensuring that the emulsion is stable during processing, and that the compound feedstuff in extruded form retains good physical properties. Passage of the mixture of lipid and molasses through an in-line homogeniser will normally provide a small lipid particle size, but this procedure can be facilitated by either or both of the following preferred techniques:

a) Ensuring that the pH of the molasses prior to emulsion formation is at least about 8. Preferably this is achieved by the addition of aqueous alkali such as aqueous sodium hydroxide to the molasses. Normally, molasses has a pH of about 5 when purchased.

b) Addition of a minor amount of protein, preferably casein, and more preferably whey, to the molasses. The amount of added protein should preferably be at least about 1% by weight of the molasses. Generally the amount of added protein need not be greater than about 3% by weight. If casein is used, the pH of the molasses should be raised, otherwise the casein may tend to precipitate because the pH of commodity molasses is close to the iso-electric point of casein.

Example 1

The following experiment shows the effect of lipid particle size on the stability of a 60/40 emulsion of molasses and palm fatty acid distillate (PFAD).

The molasses and oil were separately heated in a water bath, the molasses to a temperature of 50°C and the oil to a temperature of 60°C. The heated oil was gradually blended with the molasses with vigorous stirring until all of the oil had been incorporated into a single phase premix. The premix was homogenised using a laboratory bench-scale homogeniser to provide a stable emulsion.

## Table I

### Particle Size v. Temp. Stability

| Mixing Time | Av. Particle Size | Temp. Stability |
|---|---|---|
| 1/2 min | 80.11 $\mu$m | unstable (43°C) |
| 1 min | 77.08 $\mu$m | unstable (39°C) |
| 2 min | 68.64 $\mu$m | unstable (42°C) |
| 4 min | 56.37 $\mu$m | 80°C |
| 10 min | 16.05 $\mu$m | 80°C |

Example 2

A range of emulsions were prepared, using different lipids, to ascertain the maximum level of lipid that could be included without loss of stability (homogenisation for 10 minutes).

## Table II

### Fat in Molasses Stable to Agitation at 80°C

| Oil Type | Maximum Fat Level (%) |
|---|---|
| PFAD | 40 |
| Soya | 60 |
| Coconut | 60 |
| Coconut:Soya 1:1 | 60 |
| Fish acid oil | 33 |

Example 3

A pelleted animal feedstuff was made according to the following formulation, using a ring-roll press. The lipid/molasses emulsion was prepared as in Example 1 above. The resulting pellets were sufficiently hard, robust and free-flowing to be of commercially-acceptable quality, despite the high total lipid level (8.8% by weight) in the formulation.

| Component | % |
|---|---|
| Wheat | 30 |
| Indian paddy meal | 6 |
| Sugarbeet pulp | 9 |
| Rapeseed meal | 22 |
| Semi-decorticated sunflower meal | 8 |
| Field beans | 8 |
| Molasses (free) | 3 |
| Protected fat* | 2 |
| Emulsion** | 12 |

*"Megalac" (solid fat protected as calcium salts)
**40/60 palm fatty acid distillate/molasses

## Claims

1. A process for the manufacture of a compound animal feedstuff containing lipid, molasses and solid feed ingredients, wherein the lipid and molasses are mixed to form an emulsion stable to reheating to a temperature of at least 70°C, and the emulsion is blended with the solid feed ingredients and extruded.

2. A process according to claim 1, wherein the emulsion is stable to reheating to a temperature of at least 80°C.

3. A process according to claim 1 or claim 2, wherein the emulsion is formed by homogenisation.

4. A process according to any one of the preceding claims, wherein the emulsion is formed at elevated temperature.

5. A process according to claim 4, wherein the molasses is heated to a temperature of at least about 50°C, preferably at least about 60°C, before emulsification.

6. A process according to any one of the preceding claims, wherein the emulsion contains lipid particles (droplets) of average size not greater than about 60μm, preferably not greater than about 30 μm.

7. A process according to any one of the preceding claims, wherein the emulsion is formed by passage of the lipid and the molasses together through an in-line homogeniser.

8. A process according to any one of the preceding claims, wherein the pH of the molasses is adjusted to a value of at least about 8 prior to formation of the emulsion.

9. A process according to any one of the preceding claims, wherein a minor amount of protein is added to the molasses prior to formation of the emulsion.

10. A process according to claim 11, wherein the protein is casein and the pH of the molasses is at least 8.

11. A process according to claim 11, wherein the protein is whey.

12. A process according to any one of the preceding claims, wherein the compound feedstuff is formed by extrusion in a ring-roll press.

13. Use of an emulsion of lipid and molasses that is stable to reheating to a temperature of at least 70°C to increase the lipid inclusion level in an extruded compound animal feedstuff without impairing the physical properties of the extruded feedstuff.

14. Use of an emulsion of lipid and molasses containing lipid particles (droplets) of average size not greater than about 60$\mu$m to increase the lipid inclusion level in an extruded compound animal feedstuff without impairing the physical properties of the extruded feedstuff.

15. Equipment for the manufacture of an extruded compound animal feestuff, comprising means for holding and heating lipid to a temperature of at least about 50°C, means for holding and heating molasses to a temperature of at least about 50°C, mixing means capable of forming an emulsion of the pre-heated lipid and pre-heated molasses containing lipid particles (droplets) of average size not greater than about 60$\mu$m, and means for blending the emulsion with solid animal feedstuff ingredients and extruding the resulting blend to form a compound feedstuff.

**European Patent Office**

## EUROPEAN SEARCH REPORT

Application Number

EP 92 30 3323

## DOCUMENTS CONSIDERED TO BE RELEVANT

Page 1

| Category | Citation of document with indication, where appropriate, of relevant passages | Relevant to claim | CLASSIFICATION OF THE APPLICATION (Int. Cl.5 ) |
|---|---|---|---|
| Y | EP-A-0 348 103 (CARGILL, INC.)<br>* claims 1-3,7; example 4 *<br>--- | 1,13-15 | A23K1/02<br>A23K1/16 |
| Y | GB-A-2 031 937 (BALFOUR MANUFACTURING COMPANY LIMITED)<br>* page 2, line 89 - line 97 *<br>* page 3, line 3 - line 22; claim 1 * | 1,13-15 | |
| A | * claims 3,4,11 *<br>--- | 6,9,11 | |
| Y | US-A-3 573 924 (ALBERT I. ZAROW)<br>* column 4; example IV *<br>* column 5, line 64 - line 70 *<br>* column 6, line 17 - line 30 *<br>* column 6, line 43 - line 65; claims 1-7 *<br>--- | 1,13-15 | |
| Y | GB-A-500 770 (VITAMOL, INC.)<br>* page 2, line 21 - line 52; claims 1,2,4 *<br>--- | 1,3,7 | |
| Y | GB-A-533 323 (VITAMOL, INC.)<br>* page 2, line 24 - line 50; claims 1-3 *<br>--- | 1,3,7 | |
| Y | GB-A-544 490 (NATIONAL OIL PRODUCTS COMPANY)<br>* page 2, line 10 - line 54; claims 1-3 *<br>--- | 1,3,7 | TECHNICAL FIELDS SEARCHED (Int. Cl.5 )<br><br>A23K |
| A | EP-A-0 253 705 (TIERNY, JEAN-BENOIT)<br>* page 6; example *<br>* claim 1 *<br>--- | 1 | |
| A | AU-A-429 742 (GABRIEL PETER KAUZAL)<br>* claims 1,2; example 1 *<br>--- | 1-5 | |
| A | FR-A-2 340 057 (MITSUI SUGAR CO., LTD)<br>* claim 1 *<br>--- | 1,8 | |
| A | PATENT ABSTRACTS OF JAPAN<br>vol. 8, no. 11 (C-205)(1448) 18 January 1984<br>& JP-A-58 179 440 ( MITSUI TOATSU KAGAKU K.K. )<br>20 October 1983<br>* abstract *<br>--- | 1,15 | |

The present search report has been drawn up for all claims

| Place of search | Date of completion of the search | Examiner |
|---|---|---|
| THE HAGUE | 13 JULY 1992 | DEKEIREL M.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 250 827 (MITSUBISHI DENKI KABUSHIKI KAISHA)<br>* page 4, line 15 - line 17 *<br>* page 4, line 25 - line 32 *<br>* page 4, line 45 - page 5, line 3; claim 1 * | 1-4,15 | |
| | ----- | | |
| | | | TECHNICAL FIELDS SEARCHED (Int. Cl.5 ) |

The present search report has been drawn up for all claims

| Place of search | Date of completion of the search | Examiner |
|---|---|---|
| THE HAGUE | 13 JULY 1992 | DEKEIREL M.J. |

EPO FORM 1503 03.82 (P0401)